# EUROPEAN PATENT SPECIFICATION

(11) **EP 1 101 911 B1**
(45) Date of publication and mention of the grant of the patent: **29.12.2004**
(21) Application number: 00929892.8
(22) Date of filing: 29.05.2000
(51) Int. Cl.: B01J 35/04, F01N 3/28, B01D 53/92

(54) **METHOD OF MANUFACTURING CATALYTIC CONVERTER USING A CANNING STRUCTURAL BODY**
VERFAHREN ZUR HERSTELLUNG EINES KATALYSATORS MIT EINEM METALLUMMANTELTEN STRUKTURELLER KÖRPER
PROCEDE DE FABRICATION D'UN CONVERTISSEUR CATALYTIQUE AU MOYEN D'UN CORPS STRUCTURAL AVEC ENVELOPPE METALLIQUE

(30) Priority: 31.05.1999 JP 15183699
(43) Date of publication of application: 23.05.2001
(73) Proprietor: NGK INSULATORS, LTD., Nagoya-City, Aichi Prefecture 467-8530 (JP)
(72) Inventor: YAMADA, Toshio, Nagoya-city, Aichi 467-8530 (JP); HIJIKATA, Toshihiko, Nagoya-city, Aichi 467-8530 (JP)
(74) Representative: Paget, Hugh Charles Edward
(86) International application number: PCT/JP2000/003420
(87) International publication number: WO 2000/073637

(56) References cited:
- EP-A- 0 807 466
- EP-A- 0 859 133
- EP-A- 0 947 673
- EP-A- 1 020 621
- EP-A1- 0 859 133
- JP-A- 7 000 766
- JP-A- 9 155 202
- JP-A- 9 299 811
- JP-A- 9 317 451
- JP-A- 9 317 455
- US-A- 4 093 423

## Description

### Technical Field

The present invention relates to a method of producing a ceramic catalytic converter which is a device for purifying harmful combustion gasses exhausted from internal combustion engines and the like.

### Background Art

Currently, ceramic honeycomb catalytic converters are widely used as automobile exhaust gas purifying devices.

Environmental issues in recent years along with even stricter exhaust gas restrictions are requiring that catalysts be able to function immediately following starting the engine when the exhaust gas is still cool, i.e., cold starts.

Accordingly, a ceramic honeycomb structure having a peripheral cell wall having a thickness of generally 0.1 mm or more, and more specifically 0.16 mm or more, has been used in a conventional catalyst carrier. Recently, a ceramic honeycomb structure having a cell wall having 1/2 - 1/6 of a thickness of a conventional one has been used so as to lower the thermal capacity of a ceramic honeycomb structure, which is a catalyst carrier and speed up the temperature rising of the catalyst carrier, along with avoiding deterioration in engine performance due to pressure loss.

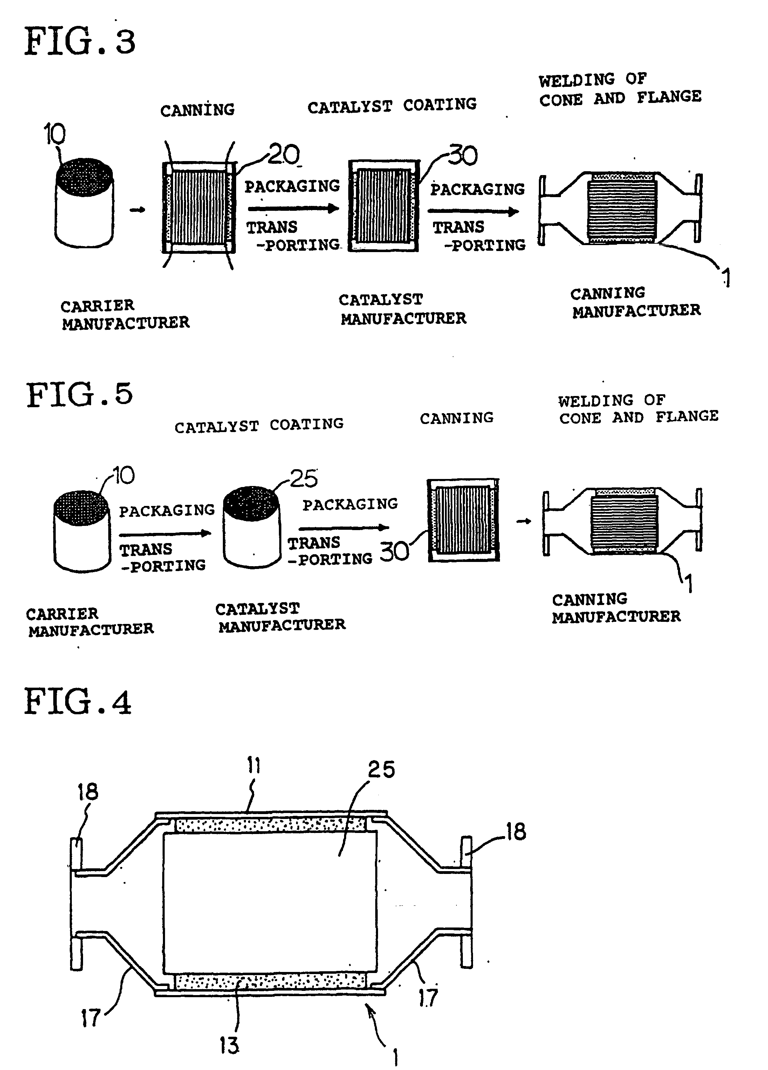

Normally, a ceramic honeycomb catalytic converter using a ceramic honeycomb structure as a catalyst carrier is manufactured through the steps shown in Fig. 5.

For example, in the case that a ceramic honeycomb catalytic converter is produced by cooperation of a plurality of makers having different functions, first, the carrier manufacturer producing a ceramic honeycomb structure, which is a carrier, packages a ceramic carrier 10, i.e., ceramic honeycomb structure which has passed inspection and sends it to a catalyst manufacturer.

The catalyst manufacturer unpacks this, performs processes such as coating the ceramic carrier 10 with a desired catalyst, thermal processing, inspection, etc., thereby forming a catalyst carrier 25, i.e., ceramic honeycomb catalyst carrier, which is then packaged and sent to a canning manufacturer.

The canning manufacture unpacks this and attaches a holding member 13 to the catalyst carrier 25 so as to fix within a metal case 11 by compressed fixing, i.e., canning, thus forming a canning catalyst carrier 30, following which joining parts such as a cone portion 17 and flange 18 and the like are welded to the canning catalyst carrier 30 as necessary, thus completing a catalytic converter 1 as shown in, for example, Fig. 4, i.e., ceramic honeycomb catalytic converter.

However, in the event that a ceramic honeycomb structure having the thickness of the partitions at around 1/2 to 1/6 of the conventional thickness is used as the above catalyst carrier, there has been the problem that the ceramic honeycomb structure easily cracks or chips during transporting, the catalyst carrying process, the canning process, and handling in each of the processes, e.g., packaging, unpacking, placing on or taking off of the mechanical facilities such as conveyers, chucking, and canning.

For example, there arose a problem that incidence of cracks or chips in a ceramic honeycomb structure in all of the aforementioned production processes drastically increases up to 20-odd % when a ceramic honeycomb structure having a thickness of cell walls of 0.06 mm and 140 throughholes / cm², which cell wall has a thickness of about 1/2 - 1/6 of that of a conventional one, is employed; while incidence of cracks or chips in a ceramic honeycomb structure in all of the aforementioned production processes is 1% or less when a conventional representative ceramic honeycomb structure having a thickness of cell walls of 0.17 mm and 62 throughholes / cm² is employed.

In order to solve this problem, thickness of a peripheral portion or a peripheral portion and cell walls near the peripheral portion of the ceramic honeycomb structure, that is, the outermost wall of the honeycomb carrier or cell walls in contact with or near the outermost wall is selectively thickened at present. However, by employing such a constitution, not only thermal shock resistance of the ceramic honeycomb structure is decreased a great deal, but also walls in a cell portion in contact with the thickened cell walls are deformed, and thereby isostatic strength of the ceramic honeycomb structure is sharply decreased.

EP 1020621 describes a gas duct including a ceramic honeycomb structure accommodated in a metal case. When used as a catalytic converter, the ceramic honeycomb structure loaded into the case supports a catalyst.

EP 0947673 describes a method for assembling a catalytic converter by surrounding a ceramic honeycomb structure supporting a catalyst with a low-friction supporting mat to allow the honeycomb structure to slide smoothly into a metal case.

WO98/35144 describes using a flexible intumescent sheet as a mounting mat to mount a ceramic monolith supporting a catalyst in a catalytic converter.

EP 0643204 describes a catalytic converter having a ceramic honeycomb supporting a catalyst loaded into a canning structure.

### Disclosure of Invention

The present invention has been made in light of the present situation, and accordingly, it is an object thereof to provide a method of producing a ceramic catalytic converter, capable of preventing chipping and cracking of the ceramic honeycomb structure at the time of transporting, the catalyst carrying process, the canning process, and handling in each of the processes, without decreasing properties of the ceramic honeycomb structure.

That is, according to the present invention, there is provided a method of producing a ceramic catalytic convertor as set out in claim 1.

Preferably, the ceramic honeycomb body has cell walls thinner than 0.08 mm.

The holding member may be a non-intumescent ceramic fiber mat.

### Brief Description of Drawings

Figs. 1(a), 1(b) and 1(c) show a canning structure which is obtained during a method of the present invention. Fig. 1(a) is a front view, Fig. 1(b) is a side view, and Fig. 1(c) is a transverse sectional view.
Figs. 2(a), 2(b) and 2(c) show another canning structure obtained during another method of the present invention. Fig. 2(a) is a front view, Fig. 2(b) is a side view, and Fig. 2(c) is a transverse sectional view.
Fig. 3 is a schematic view showing a production process of a ceramic honeycomb catalytic converter, embodying the present invention.
Fig. 4 is a schematic explanatory view showing a ceramic honeycomb catalytic converter.
Fig. 5 is a schematic view showing a production process of a conventional ceramic honeycomb catalytic converter.

### Examples of Carrying Out the Invention

A canning structure in a method of the present invention is formed by previously fixing a ceramic honeycomb structure, before loading a catalyst, in a metal case by a holding member. By this, chipping and cracking of the ceramic honeycomb structure having a thin thickness of the partitions at around 1/2 to 1/6 of the conventional thickness is prevented at the time of transporting, the catalyst carrying process, the canning process, and handling in each of the processes, without decreasing properties of the ceramic honeycomb structure.

The present invention is hereinbelow described in more detail on the basis of the drawings.

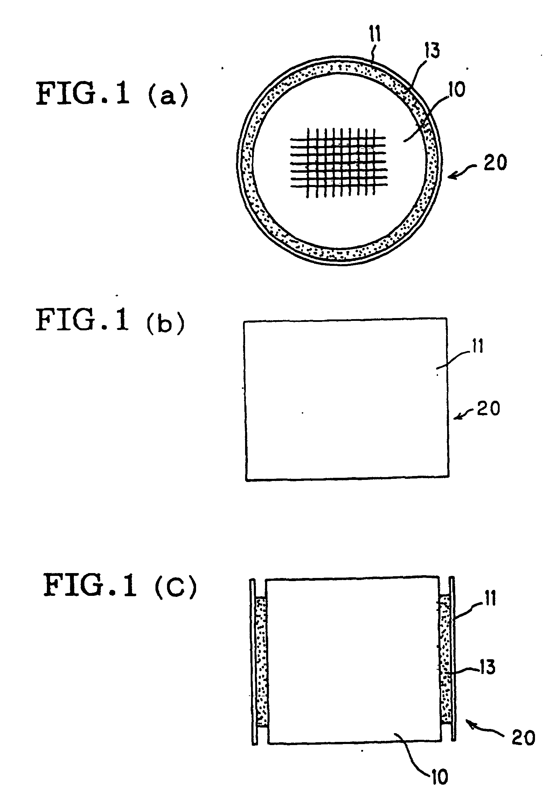

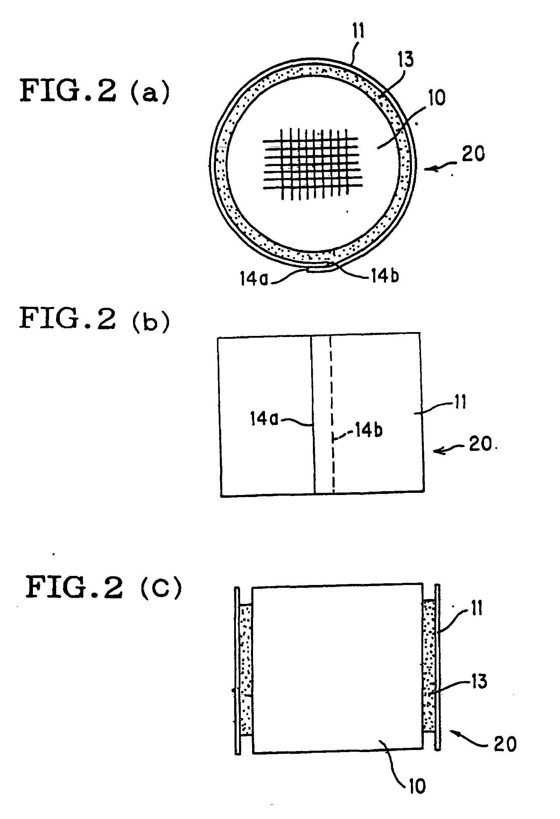

Figs. 1(a) - 1(c) and 2(a) - 2(c) are explanatory views showing an example of a canning structure of the present invention.

As shown in Figs. 1(a) - 1(c) and 2(a) - 2(c), a canning structure is prepared by fixing a ceramic honeycomb structure 10 having a thickness of the partitions at around 1/2 to 1/6 of the conventional thickness beforehand in a metal case 11 by a holding member 13.

By this, the canning structure 20 can protect the ceramic honeycomob structure 10 from shocks or vibrations from outside. Therefore, chipping and cracking of the ceramic honeycomb structure 10, particularly a ceramic honeycomb structure having a thickness of cell walls of less than 0.10 mm, particularly 0.08 mm or less, can be prevented at the time of transporting, the catalyst carrying process, the canning process, and handling in each of the processes, without decreasing properties of the ceramic honeycomb structure.

Further, the canning structure is not required to have a thickened peripheral portion or a thickened peripheral portion and cell walls near the periphery of the ceramic honeycomb structure, i.e., the outermost wall of the honeycomb carrier and cell walls in contact with the outermost wall and cell walls located near the former cell walls. Thus there arises no problem of deterioration in thermal shock resistance or isostatic strength of the ceramic honeycomb structure when it is mounted.

The canning structure 20 preferably has a metal case having a stuffing structure as shown in Figs. 1(a) - 1(c) or a tourniquet structure as shown in Figs. 2(a) - 2(c).

This is because the plane pressure distribution at the time of canning is uniform, which allows prevention of engine exhaust gasses leaking, erosion of the holding material due to the exhaust gasses, and rattling, damage, etc., of the ceramic honeycomb structure due to engine vibrations, thereby improving reliability.

Particularly, in the event that the metal case has a tourniquet structure wherein both end portions 14a and 14b of the case are connected by welding or the like as shown in Figs. 1(a) - 1(c), not only is the plane pressure distribution uniform, but also canning can be performed at a constant plane pressure without being influenced by irregularities in the diameter of the ceramic honeycomb structure, which is particularly preferable for ceramic honeycomb structures having thin cell walls with low mechanical strength used in the present invention.

Also, the holding member 13 used in the present invention is preferably a non-intumescent ceramic fiber mat.

This allows the maximum plane pressure at the time of caning due to irregularities in the diameter of the ceramic honeycomb structure to be reduced, and an excessive pressure is not generated at the time of heating as with expanding mats. Therefore, a ceramic honeycomb structure having a thickness of cell walls at around 1/2 to 1/6 of the conventional thickness, i.e., cell walls having a thickness of below 0.1 mm, more specifically, a thickness of 0.08 mm - 0.02 mm can be prevented from being damaged.

Now, the non-intumescent ceramic fiber mat used with the present invention is made up of at least one selected from the following group; alumina, mullite, silicon carbide, silicon nitride, and zircon. This non-intumescent ceramic fiber mat is formed of ceramic fibers wherein the fiber diameter is 2 µm or more and less than 6 µm, such that application of an initial plane pressure of 2 kgf/cm² at room temperature and then raising the temperature to 1,000°C results in generation of a plane pressure of at least 1 kgf/cm², and also has the compression properties in that there is little increase or decrease within the actual usage temperature range of the catalytic converter 1.

The partition thickness of the ceramic honeycomb structure used in the present invention is preferably below 0.10 mm, and more preferably, 0.08 mm - 0.02 mm.

This is because by decreasing a thickness of cell walls in such a manner, function of catalyst at cold starts can be exhibited in a short time by lowering the thermal capacity of the catalyst carrier and speeding up the temperature rising of the catalyst carrier, along with avoiding deterioration in engine performance due to pressure loss.

Next, a scheme of a manufacturing processing for the ceramic honeycomb catalytic converter, using the canning structure, according to the present invention will be described with reference to Fig. 3.

In the case that a catalytic converter is produced by a division of labor system, first , the carrier manufacture provides a holding member 13 to a ceramic carrier 10 which has passed inspection and compresses and fixes the ceramic carrier 10 within a metal case 11 for canning, thereby forming a canning structure 20, which is then packaged and sent to a catalyst manufacturer.

The catalyst manufacturer unpacks this, performs the processes such as causing the canning structure 20 to carry the catalyst, thermal processing, inspection, etc., thereby forming a canning catalyst carrier, which is then packaged and sent to a canning manufacturer.

The canning manufacturer unpacks this and welds joining parts such as a cone portion 17 and flange 18 and the like to the canning catalyst carrier 30, thereby completing the ceramic honeycomb catalytic converter as schematically shown in Fig. 4, i.e., a catalytic converter 1.

It is a matter of course that all these steps may be performed in the same factory or the same company.

As described above, the method for manufacturing the ceramic honeycomb catalytic converter according to the present invention is capable of protecting the ceramic honeycomb structure 10 from external shock and vibrations as compared with conventional manufacturing methods shown in Fig. 5, and accordingly chipping and cracking of ceramic honeycomb structures 10 can be markedly prevented at the time of transporting, the catalyst carrying process, the canning process, and handling in each of the processes.

Next, the effects of the present invention will be described in further detail with reference to embodiments. However, it should be noted that the present invention is by no means restricted to these embodiments.

### [ Embodiment 1 ]

A cordierite ceramic carrier 10 with a diameter of 106 mm, length of 114 mm, thickness of peripheral wall of 0.03 mm, and 140 throughholes / cm², was prepared, and a non-intumescent ceramic fiber mat ("MAFTEC"(product name), manufactured by MITSUBISHI CHEMICAL CORPORATION) of 1,200 g per 1 m² was wrapped thereupon, as a holding member 13.

The ceramic honeycomb structure 10 upon which the holding member 13 had been wrapped was pressed into a stainless-steel can 11 with an inner diameter of 114 mm, length of 124 mm, and thickness of 1.5 mm, using a tapered jig for pressing, thereby manufacturing the canning structure 20 shown in Figs. 1(a) - 1(c).

### [ Embodiments 2 - 3 ]

There were prepared a cordierite ceramic carrier with a diameter of 106 mm, length of 114 mm, thickness of cell walls of 0.04 mm, and 280 throughholes / cm² as a ceramic honeycomb structure 10 in Embodiment 2, and a cordierite ceramic carrier with a diameter of 106 mm, length of 114 mm, thickness of cell walls of 0.025 mm, and 465 throughholes / cm². A stainless-steel can 11 with an inner diameter of about 123 mm, length of 124 mm, and thickness of 1.5 mm was subjected to winding-tightening at a constant load upon the ceramic honeycomb structure 10 upon which the holding member 13 had been wrapped to give a design plane pressure of 2 kgf/cm² and the end of the metal case was welded extending over the full length to obtain a canning structure 20 as shown in Figs 2(a) - 2(c).

Next, twenty of such canning structures in each embodiment (60 in total) were placed in the manufacturing process of a ceramic honeycomb catalytic converter 1 shown in Fig. 3.

Consequently, no cracking or chipping of the ceramic honeycomb structure was observed at any point in the above manufacturing process.

### [ Comparative Example]

Twenty cordierite ceramic carriers 10 with a diameter of 106 mm, length of 114 mm, thickness of cell walls of 0.06 mm, and 140 throughholes / cm² were produced by the ceramic honeycomb catalytic converter (stuffing canning) manufacturing process shown in Fig. 5.

Consequently, the rate of cracking or chipping of the ceramic honeycomb structures throughout the above manufacturing process reached 25%.

It was found that since Embodiments 1 - 3 can protect a ceramic honeycomb structure from shocks and vibrations from outside in comparison with Comparative Example, chipping and cracking of the ceramic honeycomb structure at the time of transporting, the catalyst carrying process, the canning process, and handling in each of the processes can be sharply reduced.

### Industrial Applicability

A canning structure of the present invention exhibits an effect of preventing chipping and cracking of the ceramic honeycomb structure at the time of transporting, the catalyst carrying process, the canning process, and handling in each of the processes, without decreasing properties of the ceramic honeycomb structure. Consequently, it may be said that the canning structure of the present invention has high industrial applicability.

## Claims

1. A method for producing a ceramic catalytic converter comprising the steps of:
(a) preparing a structure of a ceramic honeycomb body (10) fixed within a metal case (11) by a holding member (13), the ceramic honeycomb body (10) having cell walls thinner than 0.10 mm and not carrying a catalyst,
(b) after step (a), loading the ceramic honeycomb body (10) of the structure with a catalyst, and
(c) mounting a flange and a cone portion on the structure carrying the catalyst.

2. A method according to claim 1, wherein the ceramic honeycomb body has cell walls thinner than 0.08 mm.

3. A method according to claim 1 or 2, wherein the metal case has a stuffing structure.

4. A method according to claim 1 or 2, wherein the metal case has a tourniquet structure.

5. A method according to any one of claims 1 to 4, wherein the holding member (13) is a non-intumescent ceramic fiber mat.

## Patentansprüche

1. Verfahren zur Herstellung eines keramischen Katalysators, folgende Schritte umfassend:
(a) das Ausbilden einer Struktur aus einem keramischen Wabenkörper (10), der durch ein Halterungselement (13) innerhalb eines Metallgehäuses (11) befestigt ist, wobei der keramische Wabenkörper (10) Zellwände aufweist, die dünner als 0,10 mm sind und keinen Katalysator tragen,
(b) nach Schritt (a) das Laden des keramischen Wabenkörpers (10) der Struktur mit einem Katalysator, und
(c) das Befestigen eines Flansches und eines Kegelabschnitts auf der Struktur, die den Katalysator trägt.

2. Verfahren nach Anspruch 1, worin der keramische Wabenkörper Zellwände aufweist, die dünner als 0,08 mm sind.

3. Verfahren nach Anspruch 1 oder 2, worin das Metallgehäuse eine Stopfpress-Struktur aufweist.

4. Verfahren nach Anspruch 1 oder 2, worin das Metallgehäuse eine Tourniquet-Struktur aufweist.

5. Verfahren nach einem Ansprüche 1 bis 4, worin das Halterungselement (13) eine nicht-geschäumte Keramikfasermatte ist.

## Revendications

1. Procédé de fabrication d'un pot catalytique en céramique comprenant les étapes consistant à :
(a) préparer une structure d'un corps en nid d'abeilles en céramique (10) fixé dans un boîtier en métal (11) par un élément de support (13), le corps en nid d'abeilles en céramique (10) ayant des parois d'alvéole plus minces que 0,10 mm et ne portant pas un catalyseur,
(b) après l'étape (a), le chargement du corps en nid d'abeilles en céramique (10) de la structure avec un catalyseur, et
(c) le montage d'une bride et d'une partie conique sur la structure portant le catalyseur.

2. Procédé selon la revendication 1, dans lequel le corps en nid d'abeilles en céramique a une paroi d'alvéole plus mince que 0,08 mm.

3. Procédé selon la revendication 1 ou 2, dans lequel le boîtier en métal a une structure de rembourrage.

4. Procédé selon la revendication 1 ou 2, dans lequel le boîtier en métal a une structure en tourniquet.

5. Procédé selon l'une quelconque des revendications 1 à 4 dans lequel l'élément de support (13) est un tapis de fibre céramique non-intumescent.
